# EUROPEAN PATENT APPLICATION

(11) **EP 4 692 725 A1**
(43) Date of publication of application: **11.02.2026**
(21) Application number: 24784875.7
(22) Date of filing: 01.04.2024
(51) Int. Cl.: G01C 15/00

(54) **SURVEYING DEVICE**

(30) Priority: 04.04.2023 JP 2023060955; 28.06.2023 JP 2023106283
(71) Applicant: Topcon Corporation, Tokyo 174-8580 (JP)
(72) Inventor: YUASA Taichi, Tokyo 174-8580 (JP)
(74) Representative: Louis Pöhlau Lohrentz
(86) International application number: PCT/JP2024/013452
(87) International publication number: WO 2024/210090

(57) **Abstract**

A surveying instrument has a surveying instrument main body (3) accommodating a distance measuring light projecting module (23) having a light emitter (28) for projecting a distance measuring light (35) to an object, a distance measuring light receiving module (24) having a photodetector (39) for receiving a reflected distance measuring light (45) from the object, a wide angle camera (21) for acquiring an image with a predetermined angle of view, and an arithmetic control module for controlling the distance measuring light projecting module and the wide angle camera and for calculating a distance to the object based on a light receiving result of the reflected distance measuring light with respect to the photodetector, wherein the wide angle camera has an imaging optical axis (53) tilted in a direction separated from an optical axis (27) of the distance measuring light and a deflection optical member for deflecting an optical axis of an incident background light (61) in a direction separated from the optical axis of the distance measuring light, and the imaging optical axis is configured such that a machine center (30) of the surveying instrument main body is located on a substantial extension line.

## Description

### TECHNICAL FIELD

The present invention relates to a surveying instrument capable of acquiring three-dimensional coordinates of an object.

### BACKGROUND ART

The surveying instrument such as a laser scanner, a total station, and the like has an electronic distance meter which detects a distance to an object by a prism distance measurement using a prism having a retro-reflectivity as an object and non-prism distance measurement not using a reflection prism.

Further, some of surveying instruments or laser scanners in particular have a camera in order to color a measurement point or to sight an object. However, in a case of a conventional surveying instrument, since a parallax between an optical axis of an electronic distance meter and an optical axis of a camera is large, it is possible to use only approximately a half of an image acquired by a camera for coloring a measurement point.

Therefore, there is a need to acquire a large quantity of images for coloring a point cloud data of an entire circumference, which incur increase of a processing time and an enlargement of a processing burden.

### PRIOR ART REFERENCES

### PATENT DOCUMENT

[Patent Document 1]
   WO2017/042402
[Patent Document 2]
   U.S. Patent Application Publication No. 2018/0211367

### SUMMARY OF THE INVENTION

### PROBLEM TO BE SOLVED BY THE INVENTION

The present invention provides a surveying instrument which is capable of coloring a measurement point.

### MEANS FOR SOLVING THE PROBLEM

The present invention relates to a surveying instrument having a surveying instrument main body which accommodates a distance measuring light projecting module having a light emitter for projecting a distance measuring light to an object, a distance measuring light receiving module having a photodetector for receiving a reflected distance measuring light from the object, a wide angle camera for acquiring an image with a predetermined angle of view, and an arithmetic control module for controlling the distance measuring light projecting module and the wide angle camera and for calculating a distance to the object based on a light receiving result of the reflected distance measuring light with respect to the photodetector, wherein the wide angle camera has an imaging optical axis tilted in a direction separated from an optical axis of the distance measuring light and a deflection optical member for deflecting an optical axis of an incident background light in a direction separated from the optical axis of the distance measuring light, and the imaging optical axis is configured such that a machine center of the surveying instrument main body is located on a substantial extension line.

Further, the present invention relates to the surveying instrument, wherein the wide angle camera is configured such that the deflection optical member is disposed adjacently to an inner wall of the surveying instrument main body.

Further, the present invention relates to the surveying instrument, wherein the wide angle camera further includes an imaging lens group for collecting the background light, and the imaging lens group has an imaging-lens front group and the deflection optical member, and the imaging-lens front group is disposed closer to a side of the object than the deflection optical member.

Further, the present invention relates to the surveying instrument, wherein the wide angle camera further includes an imaging lens group for collecting the background light, the imaging lens group has an imaging-lens front group and the deflection optical member, and the deflection optical member is disposed closer to a side of the object than the imaging-lens front group.

Further, the present invention relates to the surveying instrument, wherein the wide angle camera is disposed such that an off-the-shaft light beam optical axis, which is an optical axis of a light on an outermost side of the distance measuring light, crosses an optical axis of the distance measuring light at a predetermined position.

Furthermore, the present invention relates to the surveying instrument, wherein the wide angle cameras are provided in plural such that an angle of view of an adjacent wide angle camera overlaps by a predetermined range, and an intersection of a substantial extension line of each imaging optical axis of each wide angle camera substantially coincides with a position of the machine center.

### EFFECTS OF THE INVENTION

According to the present invention, the surveying instrument has a surveying instrument main body accommodating a distance measuring light projecting module having a light emitter for projecting a distance measuring light to an object, a distance measuring light receiving module having a photodetector for receiving a reflected distance measuring light from the object, a wide angle camera for acquiring an image with a predetermined angle of view, and an arithmetic control module for controlling the distance measuring light projecting module and the wide angle camera and for calculating a distance to the object based on a light receiving result of the reflected distance measuring light with respect to the photodetector, wherein the wide angle camera has an imaging optical axis tilted in a direction separated from an optical axis of the distance measuring light and a deflection optical member for deflecting an optical axis of an incident background light in a direction separated from the optical axis of the distance measuring light, and the imaging optical axis is configured such that a machine center of the surveying instrument main body is located on a substantial extension line. As a result, by reducing a parallax between the distance measuring light and the wide angle camera and by enabling enlargement of a usable range for coloring a measurement point in the image, the number of images required for coloring the measurement point can be reduced, and a reduction of a processing time and a processing burden can be achieved.

### BRIEF DESCRIPTION OF DRAWINGS

[FIG.1]

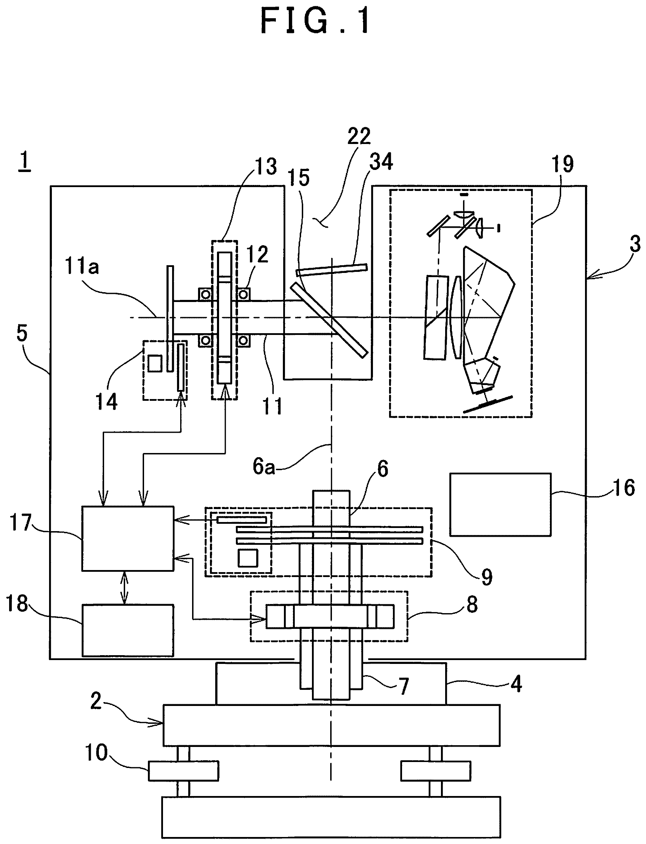

   FIG.1 is a front sectional diagram illustrating a surveying instrument according to a first embodiment.
[FIG.2]

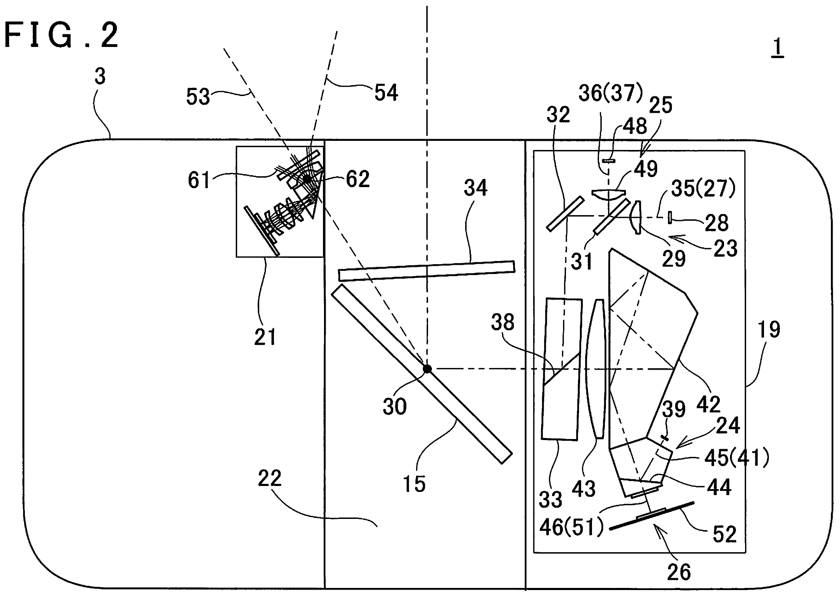

   FIG.2 is a planar sectional diagram illustrating a surveying instrument according to a first embodiment.
[FIG.3]

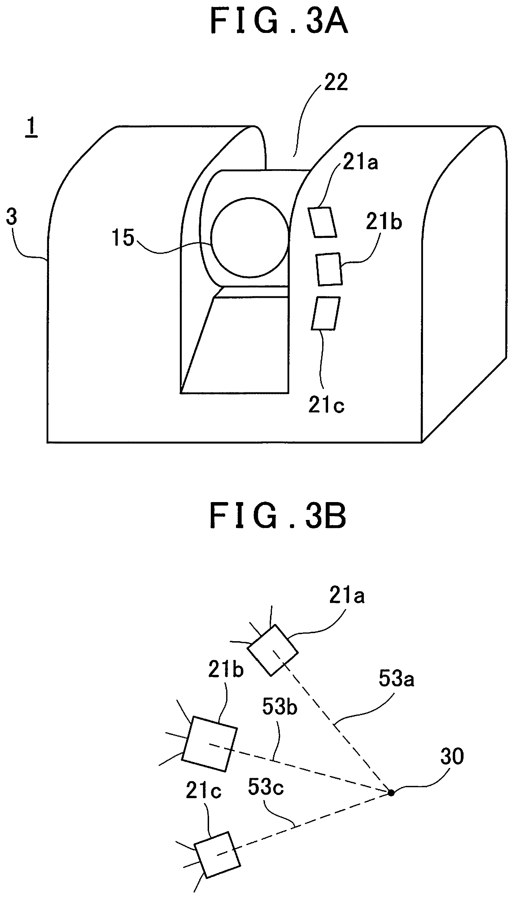

   FIG.3A is a perspective view of a surveying instrument according to a first embodiment, and FIG.3B is an explanatory diagram for explaining a disposition of a plurality of wide angle cameras.
[FIG.4]

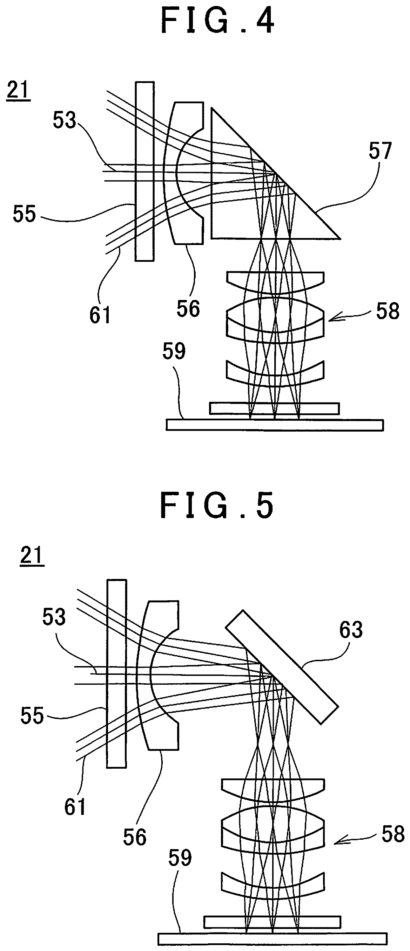

   FIG.4 is a configuration diagram illustrating an optical system of an optical camera according to a first embodiment.
[FIG.5]
   FIG.5 is a configuration diagram for explaining an optical system of an optical camera according to a modified example of a first embodiment.
[FIG.6]

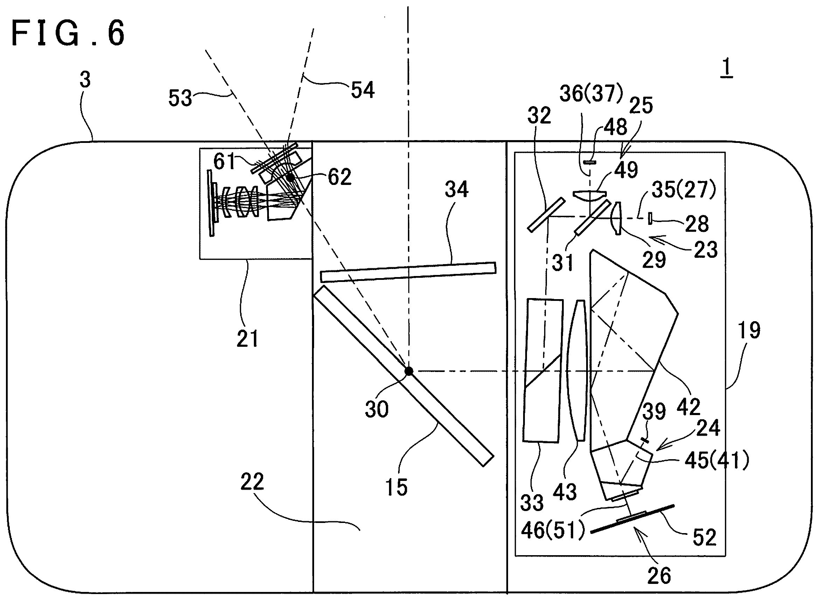

   FIG.6 is a planar sectional diagram illustrating a surveying instrument according to a second embodiment.
[FIG.7]

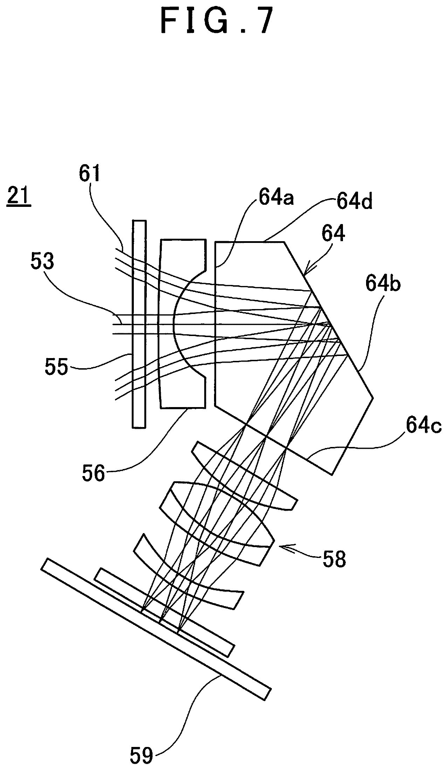

   FIG.7 is a configuration diagram for explaining an optical system of an optical camera according to a second embodiment.
[FIG.8]

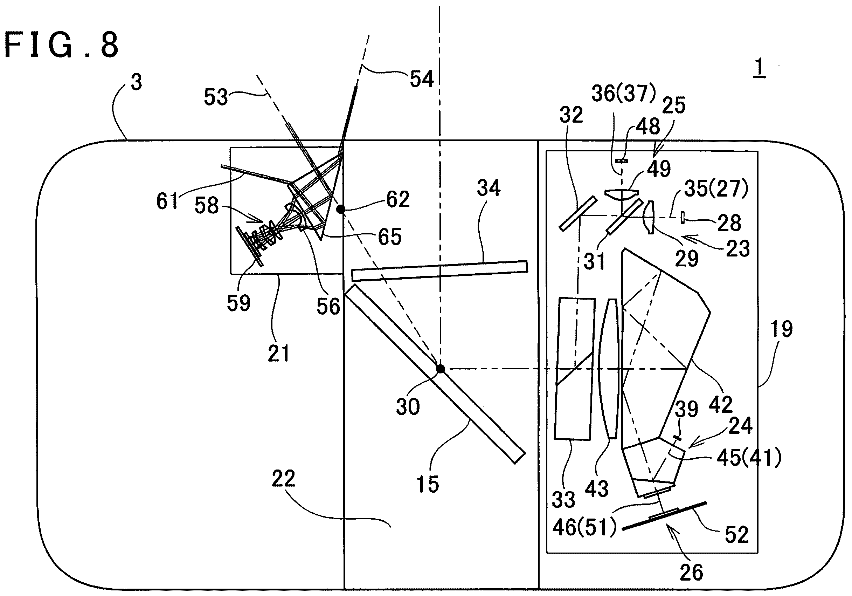

   FIG.8 is a planar sectional diagram illustrating a surveying instrument according to a third embodiment.
[FIG.9]

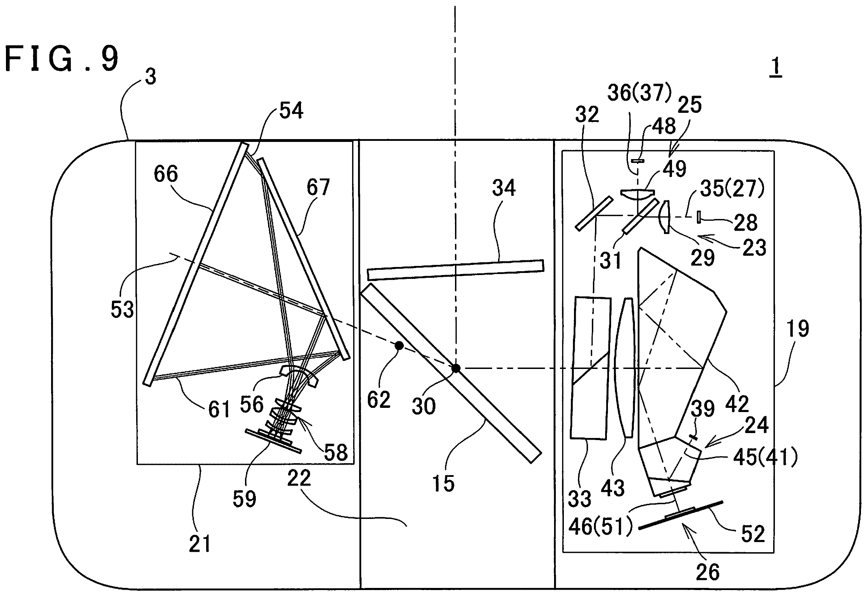

   FIG.9 is a planar sectional diagram illustrating a surveying instrument according to a fourth embodiment.

### MODE(S) FOR CARRYING OUT THE INVENTION

A description will be given below on embodiments of the present invention by referring to the attached drawings.

First, in FIG.1 to FIG.3, a description will be given on a surveying instrument according to a first embodiment of the present invention.

A surveying instrument 1 is, for instance, a laser scanner, and is constituted by a leveling module 2 mounted on a tripod (not shown) and a surveying instrument main body 3 mounted on the leveling module 2.

The leveling module 2 has a leveling screw 10 and performs leveling of the surveying instrument main body 3 by the leveling screw 10.

The surveying instrument main body 3 includes (accommodates) a fixing unit 4, a frame unit 5, a horizontal rotation shaft 6, a horizontal rotation bearing 7, a horizontal rotation motor 8 as a horizontal rotation driver, a horizontal angle encoder 9 as a horizontal angle detector, a vertical rotation shaft 11, a vertical rotation bearing 12, a vertical rotation motor 13 as a vertical rotation driver, a vertical angle encoder 14 as a vertical angle detector, a scanning mirror 15 which is a vertical rotation unit, an operation panel 16 serving both as an operation module and a display module, an arithmetic control module 17, a storage module 18, a distance measuring module 19, a plurality of wide angle camera 21 and the like. It is to be noted that, as the arithmetic control module 17, a CPU specialized for this instrument or a general-purpose CPU is used.

The horizontal rotation bearing 7 is fixed to the fixing unit 4. The horizontal rotation shaft 6 has a vertical axis 6a, and the horizontal rotation shaft 6 is rotatably supported by the horizontal rotation bearing 7. Further, the frame unit 5 is supported by the horizontal rotation shaft 6, and the frame unit 5 is designed so that the frame unit 5 is rotated in the horizontal direction integrally with the horizontal rotation shaft 6.

The horizontal rotation motor 8 is provided between the horizontal rotation bearing 7 and the frame unit 5, and the horizontal rotation motor 8 is controlled by the arithmetic control module 17. The arithmetic control module 17 causes the frame unit 5 to be rotated around the axis 6a by the horizontal rotation motor 8.

A relative rotation angle of the frame unit 5 with respect to the fixing unit 4 is detected by the horizontal angle encoder 9. A detection signal from the horizontal angle encoder 9 is input into the arithmetic control module 17, and a horizontal angle data is calculated by the arithmetic control module 17. The arithmetic control module 17 performs a feedback control with respect to the horizontal rotation motor 8 based on the horizontal angle data.

Further, the vertical rotation shaft 11 with a horizontal axis 11a is provided in the frame unit 5. The vertical rotation shaft 11 is rotatable via the vertical rotation bearing 12. It is to be noted that an intersection of the axis 6a and the axis 11a is a projection position of a distance measuring light and is an origin of a coordinate system of the surveying instrument main body 3.

A recess portion 22 is formed in the frame unit 5. The vertical rotation shaft 11 has one end part extending into the recess portion 22, the scanning mirror 15 is fixed to the one end part, and the scanning mirror 15 is accommodated in the recess portion 22. Further, at the other end part of the vertical rotation shaft 11, the vertical angle encoder 14 is provided.

The vertical rotation motor 13 is provided at the vertical rotation shaft 11, and the vertical rotation motor 13 is controlled by the arithmetic control module 17. The arithmetic control module 17 causes the vertical rotation shaft 11 to be rotated by the vertical rotation motor 13, and the scanning mirror 15 is rotated around the axis 11a.

A rotation angle of the scanning mirror 15 is detected by the vertical angle encoder 14, and a detection signal is input into the arithmetic control module 17. The arithmetic control module 17 calculates a vertical angle data of the scanning mirror 15 based on the detection signal, and performs feedback control with respect to the vertical rotation motor 13 based on the vertical angle data.

Further, a horizontal angle data, a vertical angle data, and measurement results calculated by the arithmetic control module 17 are stored in the storage module 18. As the storage module 18, various storage means are used such as an HDD as a magnetic storage device, a CD and a DVD as an optical storage device, a memory card as a semiconductor storage device, a USB memory and the like. The storage module 18 may be detachably attached to the frame unit 5 or may be capable of sending a data to an external storage device and an external data processing device via a communication means, not shown.

The storage module 18 stores various types of programs such as a sequence program for controlling a distance measuring operation, a calculation program for calculating a distance by a distance measuring operation, a calculation program for calculating an angle based on a horizontal angle data and a vertical angle data, a program for calculating a three-dimensional coordinate of a desired measuring point based on a distance and an angle, a control program for controlling a plurality of the wide angle cameras 21, a synthesis program for synthesizing images photographed by a plurality of the wide angle cameras 21, an image creation program for creating images with a three-dimensional coordinate based on calculated three-dimensional coordinates and images. Further, when the various types of programs are performed by the arithmetic control module 17, the various types of processing are performed.

The operation panel 16 is, for instance, a touch panel, and serves both as an operation module for instructing a distance measurement and for changing measurement conditions such as a measurement point interval, for instance, and a display module for displaying distance measurement results, images and the like.

Next, a description will be given on the distance measuring module 19 by referring to FIG.1 and FIG. 2. It is to be noted that, in FIG.2, the distance measuring module 19 is illustrated as a front diagram for convenience.

The distance measuring module 19 has a distance measuring light projecting module 23, a distance measuring light receiving module 24, a tracking light projecting module 25, and a tracking light receiving module 26. It is to be noted that a distance measuring module is constituted by the distance measuring light projecting module 23 and the distance measuring light receiving module 24, and a tracking module is constituted by the tracking light projecting module 25 and the tracking light receiving module 26.

The distance measuring light projecting module 23 has a distance measuring optical axis 27. Further, the distance measuring light projecting module 23 has a light emitter 28 such as a laser diode (LD), for instance, a projection lens 29, a dichroic mirror 31 provided on the distance measuring optical axis 27, and a mirror 32 provided on a transmission optical axis of the dichroic mirror 31, in order from light emitting side. Further, a reflection prism 33 is provided on a reflection optical axis of the mirror 32, and the scanning mirror 15 is provided on a reflection optical axis of the reflection prism 33. Further, a window portion 34 formed by a transparent material and rotating integrally with the scanning mirror 15 is provided on a reflection optical axis of the scanning mirror 15.

The projection lens 29, the dichroic mirror 31, the mirror 32, and the reflection prism 33 configure a light projecting optical system. Further, in the present embodiment, the distance measuring optical axis 27, the distance measuring optical axis 27 reflected by the mirror 32, the distance measuring optical axis 27 reflected by the reflection prism 33, and the distance measuring optical axis 27 reflected by the scanning mirror 15 are collectively called the distance measuring optical axis 27.

The light emitter 28 projects a visible light with a predetermined wavelength or a near-infrared light with a predetermined wavelength as a distance measuring light 35. Further, the projection lens 29 is designed so as to make the distance measuring light 35 emitted at a predetermined spread angle from the light emitter 28 to be a parallel light flux.

The dichroic mirror 31 has an optical characteristic that transmits the distance measuring light 35 and reflects a tracking light 36 (to be described later). Further, the dichroic mirror 31 is provided on a common optical path of the distance measuring light 35 and the tracking light 36 (a intersection position of the distance measuring optical axis 27 and a tracking optical axis 37 (to be described later)) and deflects (reflects) the tracking optical axis 37 such that the tracking optical axis 37 coincides with the distance measuring optical axis 27. Therefore, the distance measuring light 35 and the tracking light 36 are emitted coaxially toward an object.

The reflection prism 33 is formed by joining two trapezoidal prisms. In a state where two prisms are joined, the reflection prism 33 has a rectangular shape. An incident surface of the reflection prism 33, into which the distance measuring light 35 is incident, is orthogonal with respect to the distance measuring optical axis 27, and a joined surface 38 of the reflection prism 33 is tilted by a predetermined angle with respect to the distance measuring optical axis 27. Further, a projection surface of the reflection prism 33, to which the distance measuring light 35 is projected (transmitted), is designed such that the distance measuring optical axis 27 reflected by the joined surface 38 is incident with a slight tilt such as 2.5°, for instance. Therefore, the distance measuring light 35 internally reflected by the projection surface of the reflection prism 33 is prevented from being received by a photodetector 39 (to be described later). It is to be noted that a tilt angle of the joined surface 38 is an angle which deflects (reflects) the distance measuring optical axis 27 such that the distance measuring optical axis 27 coincides with a light receiving optical axis 41 (to be described later) and the axis 11a. Further, as the photodetector 39, for instance, an Avalanche Photo Diode (APD) or an equivalent photoelectric conversion element is used.

The distance measuring light receiving module 24 has the light receiving optical axis 41. Further, the distance measuring light receiving module 24 has the photodetector 39 and a light receiving prism 42 provided on the light receiving optical axis 41 in an order from a light receiving side, and has a light receiving lens 43 with a predetermined NA (Numerical Aperture) provided on the light receiving optical axis 41 reflected by the light receiving prism 42.

The light receiving prism 42 has a dichroic film 44 as a separation surface. The light receiving prism 42 is configured to make the distance measuring light 35 (reflected distance measuring light 45) reflected by an object and the tracking light 36 (reflected tracking light 46) incident coaxially with the reflected distance measuring light 45 to be internally reflected at least once on the same plane. Further, the dichroic film 44 has an optical characteristic that reflects the reflected distance measuring light 45 and transmits the reflected tracking light 46.

It is to be noted that, a light receiving optical system is constituted by the light receiving prism 42, the light receiving lens 43, and the reflection prism 33. Further, in the present embodiment, the light receiving optical axis 41 and the light receiving optical axis 41 reflected by the light receiving prism 42, the dichroic film 44 and the scanning mirror 15 are collectively called the light receiving optical axis 41.

The tracking light projecting module 25 has the tracking optical axis 37. Further, the tracking light projecting module 25 has a tracking light emitter 48, a tracking projection lens 49, and the dichroic mirror 31 provided on the tracking optical axis 37, and has the mirror 32 provided on the reflection optical axis of the dichroic mirror 31, and the reflection prism 33 provided on the reflection optical axis of the mirror 32, in an order from a light emission side.

The tracking light emitter 48 is, for instance, a laser diode (LD), and is configured to project the tracking light 36 with a visible or near-infrared wavelength different from a wavelength of the distance measuring light 35. Further, the tracking projection lens 49 is configured to slightly diverge the tracking light 36 emitted from the tracking light emitter 48.

The tracking light receiving module 26 has a tracking light receiving optical axis 51. Further, the tracking light receiving module 26 has a tracking photodetector 52 and the light receiving prism 42 provided on the tracking light receiving optical axis 51, and the light receiving lens 43 provided on a reflection optical axis of the light receiving prism 42, in an order from a light receiving side. It is to be noted that, in the present embodiment, the tracking light receiving optical axis 51 and the tracking light receiving optical axis 51 reflected by the light receiving prism 42 and the scanning mirror 15 are collectively called the tracking light receiving optical axis 51.

The tracking photodetector 52 is a CCD, which is an aggregation of pixels or a CMOS sensor, and each pixel is configured such that each pixel is capable of specifying a position on the tracking photodetector 52. For instance, each pixel has a pixel coordinate with a center of the tracking photodetector 52 as an origin, and a position on the tracking photodetector 52 is specified by the pixel coordinate.

The distance measuring module 19 is controlled by the arithmetic control module 17. When the pulse-state distance measuring light 35 is projected from the light emitter 28 onto the distance measuring optical axis 27, the distance measuring light 35 is incident into the projection lens 29. The projection lens 29 makes the distance measuring light 35 a parallel light flux.

The distance measuring light 35 having been transmitted through the projection lens 29, the dichroic mirror 31 and reflected by the mirror 32 is incident at a right angle with respect to an incident surface of the reflection prism 33, is transmitted through an inside of the reflection prism 33, and is reflected by the joined surface 38 and becomes coaxial with the light receiving optical axis 41 and the axis 11a. The distance measuring light 35 projected from a projection surface of the reflection prism 33 is deflected at a right angle by the scanning mirror 15 and is irradiated an object via the window portion 34. When the scanning mirror 15 rotates around the axis 11a, the distance measuring light 35 is rotated (scanned) in a plane which orthogonally crosses the axis 11a and includes the axis 6a.

It is to be noted that the window portion 34 is provided by being tilted by a predetermined angle with respect to an optical axis of the distance measuring optical axis 27 such that the distance measuring light 35 reflected by the window portion 34 is not incident into the photodetector 39. Further, a reflection position of the distance measuring light 35 in the scanning mirror 15, that is, a reflection position of the distance measuring light 35 is a machine center 30 of the surveying instrument 1.

The reflected distance measuring light 45 reflected by an object is reflected at a right angle by the scanning mirror 15, is reflected by the dichroic film 44 in a process of going through the light receiving lens 43 and the light receiving prism 42, and is received by the photodetector 39.

The arithmetic control module 17 performs a distance measurement per pulse of the distance measuring light 35 (Time of Flight) based on a time difference between a light emitting timing of the light emitter 28 and a light receiving timing of the photodetector 39 (that is, a reciprocating time of a pulsed light) and a light velocity, and calculates a distance to an object. It is to be noted that it is possible to change the light emitting timing of the light emitter 28, that is, a pulse interval, via the operation panel 16. Further, it is possible to calculate a three-dimensional coordinate of an object based on a distance measurement result, a horizontal angle data and a vertical angle data acquired by the horizontal angle encoder 9 and the vertical angle encoder 14.

Further, while the distance measuring light 35 is projected at a predetermined pulse interval, by rotating the frame unit 5 and the scanning mirror 15, respectively, at a constant speed, in a collaboration of a rotation in a vertical direction of the scanning mirror 15 and a rotation in a horizontal direction of the frame unit 5, the distance measuring light 35 is scanned two-dimensionally. Further, by detecting a vertical angle and a horizontal angle by the vertical angle encoder 14 and the horizontal angle encoder 9 at each pulsed light, it is possible to acquire a vertical angle data and a horizontal angle data. By means of a vertical angle data, a horizontal angle data, and a distance measurement data, it is possible to acquire a three-dimensional coordinate of an object and a three-dimensional point cloud data with respect to the object with an installation position of the surveying instrument 1 as a reference.

Further, in parallel with the distance measuring operation, when the tracking light 36 with a wavelength different from the distance measuring light 35 is projected from the tracking light emitter 48, the tracking light 36 is slightly diverged by the tracking projection lens 49 and then, the tracking light 36 is deflected by the dichroic mirror 31 such that the tracking light 36 becomes coaxial with the tracking optical axis 37 and the distance measuring light 35.

The reflected tracking light 46, as irradiated to the object coaxially with the distance measuring light 35 and reflected by the object, is separated from the reflected distance measuring light 45 by the dichroic film 44 in a process of passing through the light receiving lens 43 and the light receiving prism 42, is transmitted through the dichroic film 44, and is received by the tracking photodetector 52. Further, by means of a light receiving of the reflected tracking light 46 to the tracking photodetector 52, it is possible to acquire a tracking image (not shown).

The arithmetic control module 17 is configured to calculate a position deviation between a center of the tracking photodetector 52 and a light receiving position (center of a tracking image) of the reflected tracking light 46 with respect to the tracking photodetector 52, to drive the horizontal rotation motor 8 and the vertical rotation motor 13, and to track the object such that the center and the light receiving position match each other based on the position deviation.

Next, in FIG.2 to FIG.4, a description will be given on the wide angle camera 21. Imaging processing of the wide angle camera 21 is controlled by the arithmetic control module 17.

As shown in FIG.2, an imaging optical axis 53 of the wide angle camera 21 extends to a direction separated from the distance measuring optical axis 27. On the other hand, an off-the-shaft light beam optical axis 54 indicating a light on an outermost side capable of being received by the wide angle camera 21 is tilted such that off-the-shaft light beam optical axis 54 gets closer to the distance measuring optical axis 27 and crosses the distance measuring optical axis 27 at a predetermined position. Therefore, the wide angle camera 21 includes the distance measuring optical axis 27 in an imaging range, and it becomes possible to image an irradiation point of the distance measuring light 35 with respect to an object. That is, it is possible to sight the object via the wide angle camera 21.

It is to be noted that an imaging range of the wide angle camera 21 and the distance measuring optical axis 27 cross each other at a position separated from the machine center 30 by a predetermined distance or by approximately 1m from the machine center 30, for instance. That is, the wide angle camera 21 is capable of photographing an object (irradiation point of the distance measuring light 35) located farther than a position separated from the machine center 30 by a predetermined distance.

Further, as shown in FIG.3A, the wide angle cameras 21 are provided in plural in a vertical direction (direction orthogonal to the axis 11a) on an outer surface of the surveying instrument main body 3. In FIG.3A, three wide angle cameras 21a, 21b, 21c are provided as the wide angle cameras 21, but the wide angle cameras 21 are provided over an entire circumference in a vertical direction of the surveying instrument main body 3.

On a substantial extension line of the imaging optical axis 53, the machine center 30 is located. Further, as shown in FIG.3B, the machine center 30 is located on a substantial extension line of each of the imaging optical axes 53a to 53c of each of the wide angle cameras 21a to 21c, respectively, and a position of the machine center 30 substantially matches an intersection of each of the imaging optical axes 53a to 53c.

Here, a phrase "on a substantial extension line" means that a shortest distance between the imaging optical axis 53 and the machine center 30 is within a range of an allowable error from 0 (on an extension line). A definition of "on a substantial extension line" is similar also in a following explanation. Further, a substantial matching means that a distance between the intersection and the machine center 30 is within a range of an allowable error from 0 (matching). It is to be noted that the allowable error is approximately 1/3 of an outer diameter size of the window portion 34 or approximately 15 mm when the window portion 34 is ϕ45 mm, for example.

Further, the wide angle cameras 21 are disposed such that their angles of view overlap only by a predetermined angle of view between the wide angle cameras 21 adjacent in a vertical direction, and the wide angle cameras 21 can acquire an image over an entire circumference in a vertical direction. Further, by synthesizing images of each wide angle camera 21, it is possible to acquire an entire-circumference image. Therefore, the wide angle cameras 21 can acquire an image of an entire area of a scanning range of the distance measuring light 35.

It is to be noted that a rotation position of the scanning mirror 15, that is, an irradiation direction of the distance measuring light 35 and the wide angle camera 21 are associated, and it is constituted such that an image of the wide angle camera 21 corresponding to an irradiation direction of the distance measuring light 35 is used.

Next, a description will be given on an optical system of the wide angle camera 21 by referring to FIG.4. The wide angle camera 21 has, in an order from an object side, a protective glass 55 provided on the imaging optical axis 53, an imaging-lens front group 56, a triangular prism 57 as a deflection optical member, an imaging-lens rear group 58, and an imaging element 59 provided on a reflection optical axis of the triangular prism 57. It is to be noted that the imaging-lens front group 56, the triangular prism 57 and the imaging-lens rear group 58 constitute an imaging lens group.

The imaging-lens front group 56 is a wide angle lens and is configured to collect a background light (external light) 61 at a predetermined wide angle of view or diagonally within a range of 80°, for instance. Further, the triangular prism 57 is configured to deflect the background light 61 by 90° in a direction separated from the distance measuring optical axis 27. Further, the imaging-lens rear group 58 focuses the background light 61 deflected by the triangular prism 57 on the imaging element 59, and an image is acquired.

It is to be noted that the wide angle camera 21 is disposed such that a reflection surface of the triangular prism 57 is adjacent to an inner wall of the recess portion 22, i.e., is adjacent to an inner wall of the surveying instrument main body 3. Further, an incident pupil position 62 (see FIG.2) of the imaging lens group becomes a position to be a reference of a field of view of the wide angle camera 21. A positional relation (a distance and a direction) between the incident pupil position 62 and the machine center 30 is known.

The imaging element 59 is a CCD or a CMOS sensor, which is an aggregation of pixels, and it is configured such that each pixel is able to be specified its position on the imaging element. For instance, each pixel has a pixel coordinate with the imaging optical axis 53 as an origin, and a position on the imaging element 59 is specified by the pixel coordinate. Further, since a positional relation (a distance and a direction) between the imaging optical axis 53 and the incident pupil position 62 is known, it is possible to mutually associate a distance measuring position by the distance measuring module 19 with a position (pixel) on the imaging element 59. An image signal from the imaging element 59 and a coordinate information associated with a pixel are stored in the storage module 18 via the arithmetic control module 17.

The arithmetic control module 17 rotationally irradiates the distance measuring light 35 via a vertical rotation of the scanning mirror 15 and horizontally rotates the surveying instrument main body 3 and acquires a three-dimensional point cloud data of an object. Further, in parallel with an acquisition of the three-dimensional point cloud data, an image is acquired by each wide angle camera 21.

The arithmetic control module 17 gives a color information to each irradiation position of the distance measuring light 35 based on an image acquired by each wide angle camera 21 and a known positional relation between the machine center 30 and the incident pupil position 62, and can create a point cloud data with a color information. Alternatively, the arithmetic control module 17 can synthesize an image acquired by each wide angle camera 21 and a point cloud data and create an image to which a position information is given for each pixel. The created point cloud data or image is stored in the storage module 18.

As described above, in the first embodiment, the wide angle camera 21 is disposed such that the machine center 30 is located on a substantial extension line of the imaging optical axis 53 of the wide angle camera 21 and thus, it is possible to reduce a parallax between a distance measurement by the distance measuring module 19 and an imaging by the wide angle camera 21.

Therefore, in images imaged by the wide angle camera 21, it is possible to increase a range capable of being used for coloring a point cloud acquired by the surveying instrument 1 and thus, it is possible to reduce the number of images required for coloring a point cloud data on an entire circumference and to promote a reduction of a processing time and a processing burden.

Further, the wide angle camera 21 has the triangular prism 57, and is configured to deflect the incident background light 61 to a direction separated from the distance measuring optical axis 27 by the triangular prism 57 by 90°, and cause the imaging element 59 to receive the light.

Therefore, only by an optical path length deflected by the triangular prism 57, that is, only by an optical path length from a reflection surface of the triangular prism 57 to a focal position of the imaging-lens front group 56, it is possible to bring the incident pupil position 62 closer to the machine center 30 and thus, it is possible to further reduce a parallax between the distance measuring module 19 and the wide angle camera 21.

Further, the wide angle camera 21 is disposed such that the off-the-shaft light beam optical axis 54 of the wide angle camera 21 crosses the distance measuring optical axis 27. Therefore, the wide angle camera 21 is able to be used as a sighting module of the surveying instrument 1 and thus, there is no need to separately provide a sighting module, and it is possible to promote a reduction of a number of components and a reduction of a manufacturing cost.

FIG.5 illustrates a modified example of the first embodiment. In the modified example, as a deflection optical member, instead of the triangular prism 57, a plate-shaped mirror 63 is used. Further, the wide angle camera 21 is disposed adjacently to an inner wall of the recess portion 22, that is, an inner wall of the surveying instrument main body 3.

When the mirror 63 is used, too, it is possible to locate the machine center 30 on a substantial extension line of the imaging optical axis 53. Further, since it is constituted such that the background light 61 is deflected (reflected) by 90° in a direction separated from the distance measuring optical axis 27 by the mirror 63, it is possible to bring the incident pupil position 62 closer to the machine center 30 only by an optical path length from a reflection surface of the mirror 63 to a focal position of the imaging-lens front group 56 and to reduce a parallax between the distance measuring module 19 and the wide angle camera 21.

Next, in FIG.6 and FIG.7, a description will be given on a second embodiment of the present invention. It is to be noted that, in FIG.6 and FIG.7, the same components as shown in FIG.2 and FIG.4 are referred by the same symbols, and a description thereof will be omitted.

In the second embodiment, as a deflection optical member, a pentagonal shaped pentaprism 64 is used. Other constitutions are similar to those in the first embodiment.

The pentaprism 64 has an incident surface 64a into which the background light 61 is incident at an incident angle 0°, a reflection surface 64b which reflects (deflects) the background light 61 in a direction separated from the distance measuring optical axis 27 in the pentaprism 64 at 60°, and a projection surface 64c which causes the background light 61 reflected by the reflection surface 64b to be incident at an incident angle of 0° and to be projected.

Further, the pentaprism 64 has an adjacent surface 64d formed between the incident surface 64a and the reflection surface 64b, and a wide angle camera 21 is disposed such that the adjacent surface 64d is adjacent to or is brought into contact with an inner wall of a recess portion 22, that is, an inner wall of a surveying instrument main body 3, and the machine center 30 is located on a substantial extension line of an imaging optical axis 53.

It is constituted such that the background light 61 incident into the incident surface 64a via an imaging-lens front group 56 is reflected by the reflection surface 64b at 60° and is projected from the projection surface 64c toward an imaging-lens rear group 58.

In the second embodiment, the pentaprism 64 is used as a deflection optical member, and it is possible to dispose the wide angle camera 21 in a state where the adjacent surface 64d is adjacent to an inner wall of the recess portion 22 and thus, it is possible to bring the incident pupil position 62 further closer to the machine center 30 than the first embodiment, while the machine center 30 is located on a substantial extension line of the imaging optical axis 53.

Therefore, it is possible to further reduce a parallax between the distance measuring module 19 and the wide angle camera 21, and it is possible to further increase a range of an image, which is usable for coloring a point cloud. As a result, it is possible to further reduce the number of images required for the coloring of the point cloud data on an entire circumference, and it is possible to reduce a processing time and a processing burden.

Next, in FIG.8, a description will be given on a third embodiment of the present invention. It is to be noted that, in FIG.8, the same components as shown in FIG.2 are referred by the same symbols, and a description thereof will be omitted.

In the third embodiment, a wide angle camera 21 has a triangular prism 65 as a deflection optical member, an imaging-lens front group 56, an imaging-lens rear group 58, and an imaging element 59 as provided on an imaging optical axis 53, in an order from an object side, and a machine center 30 is located on a substantial extension line of the imaging optical axis 53. That is, in the third embodiment, positions of the triangular prism 65 and the imaging-lens front group 56 are opposite to those in the first embodiment. Other configurations are similar to those in the first embodiment. Further, the wide angle camera 21 is disposed such that the triangular prism 65 is adjacent to an inner wall of a recess portion 22, that is, the triangular prism 65 gets as close as possible to an inner wall of a surveying instrument main body 3.

In the third embodiment, the triangular prism 65 is configured to deflect a background light 61 in a direction separated from a distance measuring optical axis 27, and since the imaging-lens rear group 58 is disposed in a rear of a reflection surface of the triangular prism 65, it is possible to bring the incident pupil position 62 further closer to the machine center 30 than in the first embodiment, and it is possible to further reduce a parallax between a distance measuring module 19 and the wide angle camera 21.

Therefore, since it is possible to further increase a range of an image of the wide angle camera 21, which is usable for coloring a point cloud, it is possible to further reduce the number of images required for coloring a point cloud data on an entire circumference, and it is possible to promote a reduction of a processing time and a processing burden.

Next, in FIG.9, a description will be given on a fourth embodiment of the present invention. It is to be noted that, in FIG.9, the same components as shown in FIG.2 are referred by the same symbols, and a description thereof will be omitted.

In the fourth embodiment, a wide angle camera 21 has a protective glass 66, a mirror 67 as a deflection optical member, an imaging-lens front group 56, an imaging-lens rear group 58, and an imaging element 59 as provided on an imaging optical axis 53, in an order from an object side, and a machine center 30 is located on a substantial extension line of the imaging optical axis 53.

In the fourth embodiment, the wide angle camera 21 is disposed such that the protective glass 66 does not protrude from a surveying instrument main body 3, the mirror 67 is adjacent to an inner wall of a recess portion 22, that is, an inner wall of the surveying instrument main body 3 and further, the machine center 30 is located on a substantial extension line of the imaging optical axis 53. Therefore, the imaging optical axis 53 is largely tilted in a direction separated with respect to a distance measuring optical axis 27 and an off-the-shaft light beam optical axis 54 does not cross the distance measuring optical axis 27.

On the other hand, since the mirror 67 reflects a background light 61 in a direction separated from the distance measuring optical axis 27, and the imaging-lens rear group 58 is disposed in a rear of a reflection surface of the mirror 67, a distance to a focal position becomes longer, it is possible to bring the incident pupil position 62 further closer to the machine center 30. Therefore, it is possible to reduce a parallax between a distance measuring module 19 and the wide angle camera 21, to reduce the number of images of the wide angle camera 21 required for coloring a point cloud data of an entire circumference, and to reduce a processing time and a processing burden.

### REFERENCE SIGNS LIST

- 1: Surveying instrument
- 3: Surveying instrument main body
- 17: Arithmetic control module
- 21: Wide angle camera
- 23: Distance measuring light projecting module
- 24: Distance measuring light receiving module
- 27: Distance measuring optical axis
- 35: Distance measuring light
- 45: Reflected distance measuring light
- 53: Imaging optical axis
- 54: Off-the-shaft light beam optical axis
- 56: Imaging-lens front group
- 57: Triangular prism
- 61: Background light
- 62: Incident pupil position
- 63: Mirror
- 64: Pentaprism
- 65: Triangular prism
- 67: Mirror

## Claims

1. A surveying instrument having a surveying instrument main body accommodating: a distance measuring light projecting module having a light emitter for projecting a distance measuring light to an object, a distance measuring light receiving module having a photodetector for receiving a reflected distance measuring light from said object, a wide angle camera for acquiring an image with a predetermined angle of view, and an arithmetic control module for controlling said distance measuring light projecting module and said wide angle camera and for calculating a distance to said object based on a light receiving result of said reflected distance measuring light with respect to said photodetector, wherein said wide angle camera has an imaging optical axis tilted in a direction separated from an optical axis of said distance measuring light and a deflection optical member for deflecting an optical axis of an incident background light in a direction separated from the optical axis of said distance measuring light, and said imaging optical axis is configured such that a machine center of said surveying instrument main body is located on a substantial extension line.

2. The surveying instrument according to claim 1, wherein said wide angle camera is configured such that said deflection optical member is disposed adjacently to an inner wall of said surveying instrument main body.

3. The surveying instrument according to claim 2, wherein said wide angle camera further includes an imaging lens group for collecting said background light, and said imaging lens group has an imaging-lens front group and said deflection optical member, and said imaging-lens front group is disposed closer to a side of said object than said deflection optical member.

4. The surveying instrument according to claim 2, wherein said wide angle camera further includes an imaging lens group for collecting said background light, said imaging lens group has an imaging-lens front group and said deflection optical member, and said deflection optical member is disposed closer to a side of said object than said imaging-lens front group.

5. The surveying instrument according to claim 3 or 4, wherein said wide angle camera is disposed such that an off-the-shaft light beam optical axis, which is an optical axis of a light on an outermost side of said distance measuring light, crosses an optical axis of said distance measuring light at a predetermined position.

6. The surveying instrument according to claim 2, wherein said wide angle cameras are provided in plural such that an angle of view of an adjacent wide angle camera overlaps by a predetermined range, and an intersection of a substantial extension line of each imaging optical axis of each wide angle camera substantially coincides with a position of said machine center.
